# EUROPÄISCHE PATENTSCHRIFT

(11) **EP 3 598 196 B1**
(45) Veröffentlichungstag und Bekanntmachung des Hinweises auf die Patenterteilung: **18.10.2023**
(21) Anmeldenummer: 19187590.5
(22) Anmeldetag: 08.04.2006
(51) Int. Cl.: G02B 23/00

(54) **FERNOPTISCHE EINRICHTUNG MIT GROSSEM SEHFELD UND HOHER VERGRÖSSERUNG**
WIDE FIELD AND HIGH MAGNIFICATION REMOTE OPTICAL DEVICE
DISPOSITIF FERNOPTIQUE À GRAND CHAMPS DE VISION ET À GROSSISSEMENT ÉLEVÉ

(30) Priorität: 20.07.2005 AT 12202005
(43) Veröffentlichungstag der Anmeldung: 22.01.2020
(62) Teilanmeldung aus: 10001987.6
(73) Patentinhaber: Swarovski-Optik AG & Co KG., 6067 Absam (AT)
(72) Erfinder: FIEDLER, Albert, 6067 Absam (AT)
(74) Vertreter: Burger, Hannes

(56) Entgegenhaltungen:
- US-A- 3 045 545
- US-A- 4 172 634

## Beschreibung

Die vorliegende Erfindung betrifft ein Fernrohr oder Zielfernrohr mit einem Umkehrsystem und einer verstellbaren Vergrößerungsoptik mit einer mehr als vierfachen Vergrößerung.

Wenn ein Gegenstand in großer Entfernung mit bloßem Auge betrachtet wird, so erscheint dieser unter einem kleinen Winkel. Sinn einer jeden fernoptischen Einrichtung ist es, diesen kleinen Winkel zu vergrößern. Die fernoptische Einrichtung sorgt also dafür, dass ein möglichst großer Erscheinungswinkel in das Auge des Betrachters gelangen kann. Zugleich sollte ein möglichst großer Geländeausschnitt überblickt werden können.

Bei gattungsgemäßen zoombaren fernoptischen Einrichtungen mit verstellbarer Vergrößerung ist es besonders kritisch, über den gesamten Vergrößerungsbereich einen möglichst großen Geländeausschnitt überblicken zu können.

Aufgabe der Erfindung ist es, gattungsgemäße fernoptische Einrichtungen diesbezüglich zu verbessern.

Dies wird erfindungsgemäß durch ein Fernrohr oder Zielfernrohr gemäß Anspruch 1 erreicht, indem das Fernrohr oder Zielfernrohr eine optische Strahlumlenkeinrichtung aufweist, welche bei allen Vergrößerungen ein subjektives Sehfeld der fernoptischen Einrichtung von mindestens 22°, vorzugsweise zwischen 22° und 24°, zumindest für Licht mit einer Wellenlänge von etwa 550 nm gewährleistet.

Mittels der optischen Strahlumlenkeinrichtung ist es nun auch bei niedrigen Vergrößerungen, insbesondere bei der niedrigsten Vergrößerung, der fernoptischen Einrichtung möglich, ein subjektives Sehfeld von mindestens 22° bereitzustellen. Dies war bisher nur bei größeren Vergrößerungen gattungsgemäßer fernoptischer Einrichtungen möglich. Der Betrachter sieht mit Hilfe der erfindungsgemäßen fernoptischen Einrichtung somit auch bei niedrigen Vergrößerungen einen größeren Geländeausschnitt, als dies der Stand der Technik bisher zuließ.

Gemäß eines weiteren Aspektes der Erfindung wird die gestellte Aufgabe auch gelöst, wenn vorgesehen ist, dass die Strahlumlenkeinrichtung in der maximalen Vergrößerung eine Gesamtbrennweite des Umkehrsystems zwischen 11 mm und 7 mm, vorzugsweise zwischen 10 mm und 8 mm, gewährleistet.

Weitere Einzelheiten und Merkmale der Erfindung werden anhand der nachfolgend beschriebenen Figuren erläutert. Dabei zeigt:
- Fig. 1: einen Längsschnitt durch ein Zielfernrohr gemäß des Standes der Technik,
- Fig. 2a bis 2c: jeweils einen Schnitt durch ein Umkehrsystem gemäß des Standes der Technik,
- Fig. 3a bis 3c: jeweils einen Schnitt durch ein Umkehrsystem für ein erfindungsgemäßes Ausführungsbeispiel eines Zielfernrohrs und
- Fig. 4: einen schematisierten Messaufbau zur Bestimmung des subjektiven Sehfeldes.

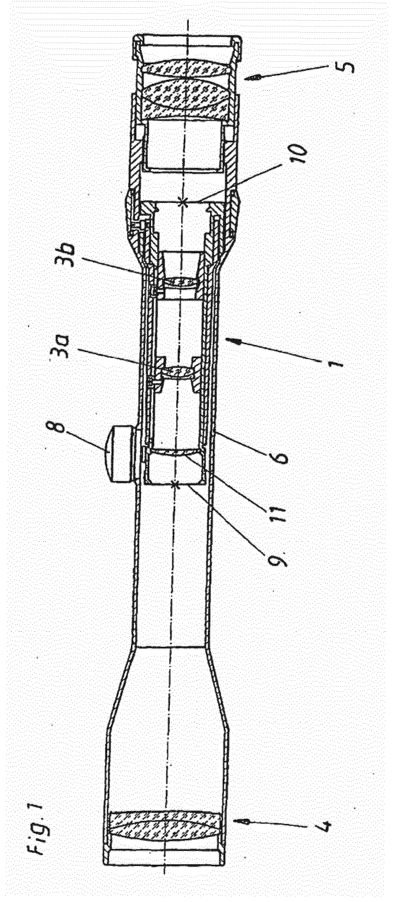

Fig. 1 zeigt schematisch einen Schnitt durch ein Zielfernrohr gemäß des Standes der Technik. Dieses weist auf der beim Beobachten dem Objekt zugewandten Seite eine im Folgenden als Objektiv 4 bezeichnete Linsenanordnung und auf der dem Auge des Betrachters zugewandten Seite ein als Okular 5 bezeichnetes Linsensystem auf. Zwischen Objektiv 4 und Okular 5 befindet sich das Mittelrohr 6. Dieses trägt häufig einen oder mehrere Verstelltürme 8, mit denen verschiedene beim Stand der Technik bekannte Justierfunktionen durchgeführt werden können. Innerhalb des Mittelrohres befindet sich zwischen Objektiv 4 und Okular 5 das Umkehrsystem 1. Dies ist ein beim Stand der Technik bekanntes optisches System, das zur Aufrichtung des vom Objektiv 4 erzeugten Bildes dient. Das Umkehrsystem 1 ist in der Regel zwischen der objektivseitigen Bildebene 9 und der okularseitigen Bildebene 10 angeordnet. Darüber hinaus dient das Umkehrsystem 1 häufig nicht nur dem Aufrichten sondern auch dem Vergrößern des in der objektivseitigen Bildebene 9 erzeugten Zwischenbildes. In dem Zielfernrohr gemäß Fig. 1 ist die Vergrößerungsoptik in das Umkehrsystem 1 integriert. Vergrößerungsoptik und Umkehrsystem sind somit in einem Bauteil ausgeführt.

Zum Vergrößern und Aufrichten des Bildes sind zwei optische Elemente 3a und 3b vorgesehen. In der Regel handelt es sich hierbei um Achromaten, die in günstiger Weise zur Kontrolle der chromatischen Aberration als sogenannte Kittlinsen, also als zusammengeklebte Linsenanordnungen ausgeführt sind. Sie weisen beim Stand der Technik wie auch bei Umkehrsystemen bzw. fernoptischen Einrichtungen gemäß der Erfindung günstigerweise Brechkräfte von + 20 dpt (Dioptrien) bis + 53 dpt, vorzugsweise von + 21 dpt bis + 35 dpt, besonders bevorzugt im Bereich zwischen + 23 dpt und + 26 dpt, auf. Um die Vergrößerung des gezeigten Zielfernrohres verstellbar zu gestalten, sind die optischen Elemente 3a und 3b entlang von Steuernuten bewegbar. Durch Verschieben der optischen Elemente 3a und 3b wird das vom Objektiv 4 in der objektivseitigen Bildebene 9 entworfene Zwischenbild mit sich veränderndem Abbildungsmaßstab und aufgerichtet in der okularseitigen Bildebene 10 abgebildet. Der Abstand der beiden Bildebenen 9 und 10 ändert sich im gezeigten Ausführungsbeispiel durch das Verschieben der optischen Elemente 3a und 3b nicht. Beim Stand der Technik ist es darüber hinaus auch bekannt, zusätzlich noch eine Feldlinse 11 vorzusehen. Diese hilft, das vom Objektiv 4 kommende Strahlenbündel eines am Sehfeldrand liegenden Objektpunktes durch den engen Kanal des Mittelrohres 6 bzw. Umkehrsystems 1 hindurchzuleiten.

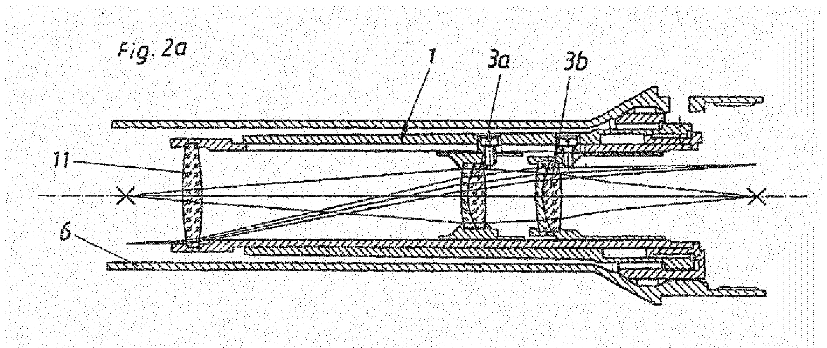

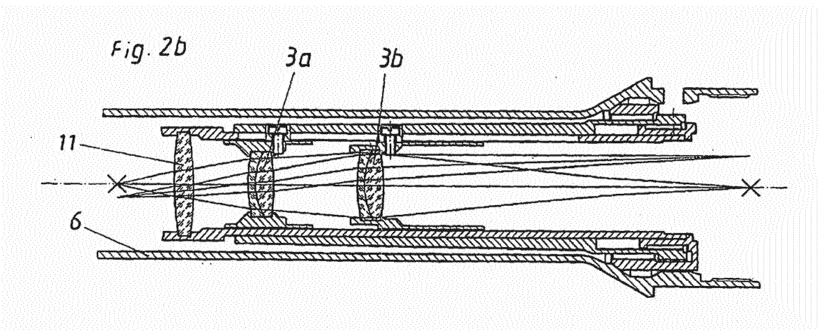

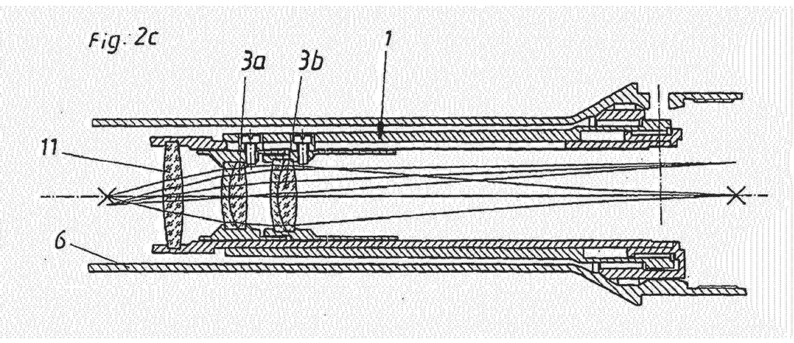

Die Veränderung des Abbildungsmaßstabes durch Bewegung der optischen Elemente 3a und 3b entlang von hier nicht weiter im Detail dargestellten Steuernuten ist beim Stand der Technik bekannt. Die Fig. 2a bis 2c zeigen die Stellungen der optischen Elemente 3a und 3b bei verschiedenen Vergrößerungen. In der in Fig. 2a gezeigten Stellung wird zum Beispiel eine einfache Vergrößerung erreicht. In der Stellung gemäß Fig. 2b erzielt das Umkehrsystem 1 eine Vergrößerung um das 2,5-fache und in der in Fig. 2c gezeigten Stellung um das 4-fache.

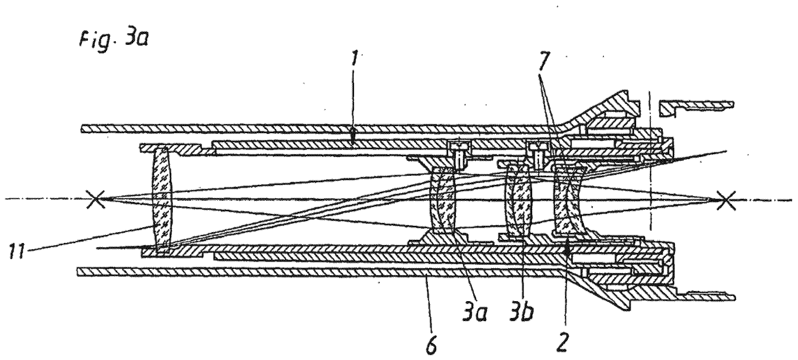

Um nun ein subjektives Sehfeld von mindestens 22° bei einer fernoptischen Einrichtung mit einer maximalen Vergrößerung bzw. einem maximalen Zoom größer vierfach auch bei niedrigen Vergrößerungen gewährleisten zu können, sieht die Erfindung eine optische Strahlumlenkeinrichtung 2 vor. Diese ist in einem Ausführungsbeispiel in den Fig. 3a bis 3c gezeigt und hier als zusätzliche Linsenanordnung in das Umkehrsystem 1 integriert. Das in den Fig. 3a bis 3c gezeigte erfindungsgemäße Umkehrsystem 1 kann zum Beispiel an Stelle des dort gezeigten Umkehrsystems 1 in ein Zielfernrohr gemäß Fig. 1 integriert werden.

Es ist vorgesehen, dass die optische Strahlumlenkeinrichtung das subjektive Sehfeld vom mindestens 22°, vorzugsweise zwischen 22° und 24°, bei einer Vergrößerungsoptik, vorzugsweise des Umkehrsystems, mit einer mindestens fünffachen, vorzugsweise bei einer mindestens sechsfachen, maximalen Vergrößerung bei allen Vergrößerungsstufen gewährleistet. Zur besseren Kontrolle der chromatischen Aberration erweist es sich als sinnvoll, dass die optische Strahlumlenkeinrichtung 2, vorzugsweise zwei, miteinander verklebte Linsen 7, also Kittlinsen, aufweist. Es wäre aber auch denkbar, die optische Strahlumlenkeinrichtung 2 als Einzellinse auszubilden.

Die optische Strahlumlenkeinrichtung 2 ist auf der zum Okular 5 weisenden Seite des Umkehrsystems 1 angeordnet, mit einer Positionierung auf der vom Okular 5 wegweisenden Seite der okularseitigen Bildebene 10.

Eine konstruktiv besonders einfache Lösung sieht vor, dass die optische Strahlumlenkeinrichtung 2 fix, also nicht bewegbar bezüglich des Mittelrohres 6, angeordnet ist. Es kann sich in gewissen Ausführungsformen aber auch als notwendig erweisen, die optische Strahlumlenkeinrichtung 2 bewegbar, also in der Regel entlang der optischen Achse verschiebbar, auszugestalten.

Das Mittelrohr 6 weist bisher bei gängigen Zielfernrohren einen Außendurchmesser zwischen 30 mm und 35 mm auf. Dies natürlich gerechnet ohne etwaig vorhandene Verstelltürme 8 oder dergleichen. Diese Abmessung des Mittelrohres 6 wird günstigerweise auch bei erfindungsgemäßen Zielfernrohren beibehalten.

Die optische Strahlumlenkeinrichtung 2 hat eine Brechkraft zwischen -20 dpt (Dioptrien) und -40 dpt, vorzugsweise zwischen -27 dpt und -37 dpt, aufweist. In einem konkreten Beispiel ist eine Brechkraft von -27,03 dpt vorgesehen, wobei bei allen Vergrößerungen ein subjektives Sehfeld von 23,5° erreicht wird.

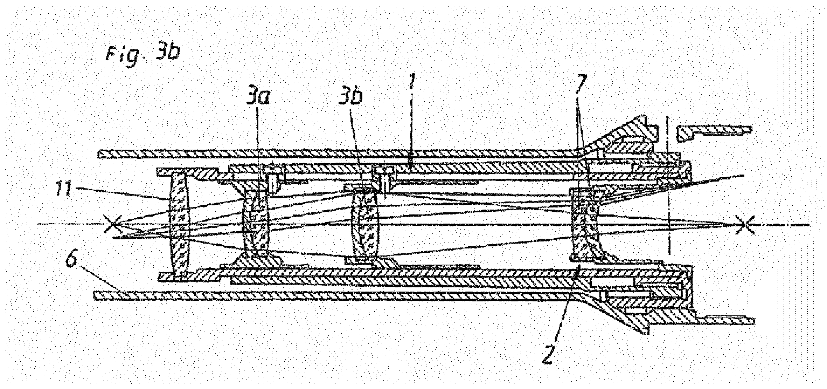

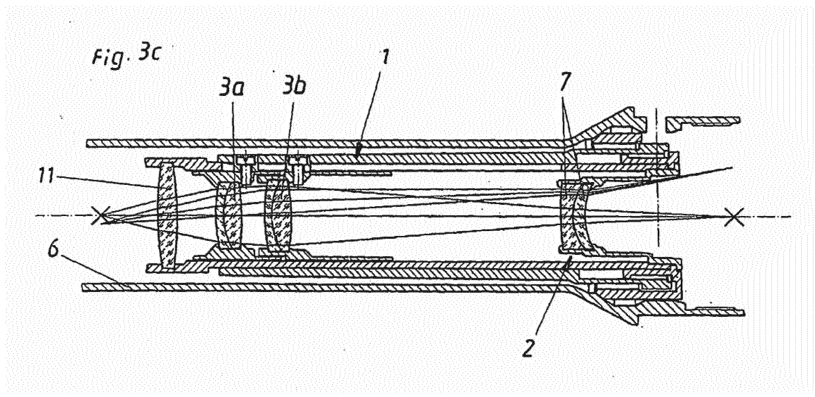

Die Fig. 3a bis 3c zeigen das erfindungsgemäße Umkehrsystem 1 wiederum in drei verschiedenen Positionen der für die Vergrößerung und Umkehrung des Bildes vorgesehenen optischen Elemente 3a und 3b. In der Stellung in Fig. 3a handelt es sich zum Beispiel um eine einfache Vergrößerung. Fig. 3b zeigt die Positionierung bei einer 3,5-fachen Vergrößerung und Fig. 3c bei einer sechsfachen Vergrößerung. Die optische Strahlumlenkeinrichtung 2 sorgt durch Strahlumlenkung für eine Vergrößerung des subjektiven Sehfeldes. Es kann hierdurch erfindungsgemäß bei allen Vergrößerungen ein subjektives Sehfeld von mindestens 22° bzw. bei der maximalen Vergrößerung eine Gesamtbrennweite kleiner gleich 11 mm erreicht werden. Die Gesamtbrennweite des erfindungsgemäßen Umkehrsystems 1 liegt auf Grund der Strahlumlenkeinrichtung 2 bei der maximalen Vergrößerung günstigerweise zwischen 11 mm und 7 mm, vorzugsweise zwischen 10 mm und 8 mm. Im erwähnten konkreten Ausführungsbeispiel wurde eine Gesamtbrennweite von 8,264 mm in der maximalen Vergrößerung erreicht.

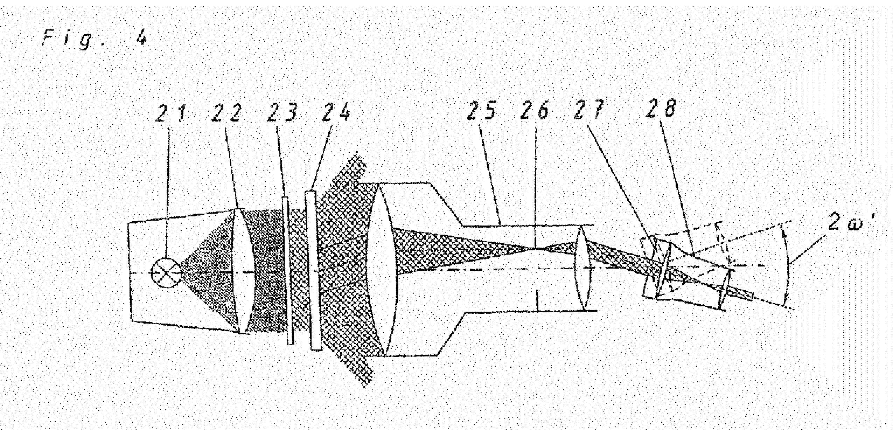

Die Größe des subjektiven Sehfeldes 2 ω' wird mittels einer Winkelmessung bestimmt. Der entsprechende Messaufbau für Prüflinge mit einer reellen Austrittspupille ist in Fig. 4 gezeigt. Auf der Okularseite des Prüflings 25 wird ein Hilfsfernrohr 28 auf einem Drehtisch mit einer Winkelmesseinrichtung montiert. Es sollte dabei ein Hilfsfernrohr 28 mit etwa dreifacher Vergrößerung, einem Durchmesser der Eintrittspupille von etwa 3 mm und einer Peilmarke, wie zum Beispiel einem Fadenkreuz, verwendet werden. Zur Vermeidung von Farbsäumen im Bild wird zur Messung grünes Licht mit einer Wellenlänge von etwa 550 nm verwendet. Der Messaufbau sieht eine Abfolge mit einer Lichtquelle 21, einem Kondensor 22, einem Filter 23, einer Streuscheibe 24, einer zu prüfenden fernoptischen Einrichtung (Prüfling) 25, einer Sehfeldblende 26 und einem Hilfsfernrohr 28 auf der Position 27 der Austrittspupille vor. Zur Durchführung der Messung liegt die Schwenkachse des Hilfsfernrohres 28 am Ort der Austrittspupille 27 und in der Ebene der Eintrittspupille des Hilfsfernrohrs. Die Schwenkachse schneidet die optische Achse des Prüflings 25 und die des Hilfsfernrohres 28 rechtwinklig. Das auf die Sehfeldblende 26 des Prüflings 25 scharf gestellte Hilfsfernrohr 28 ist zu schwenken, um dessen Peilmarke nacheinander auf einander gegenüberliegende Ränder des Sehfeldes zu bringen. Die Winkeldifferenz ist an der Skala der Winkelmesseinrichtung des Schwenktisches (in Grad) abzulesen.

Die Messung der Gesamtbrennweite eines Umkehrsystems erfolgt gemäß DIN 58189 (herausgegeben im Mai 1996) und kann mit handelsüblichen Prüfgeräten durchgeführt werden.

## Patentansprüche

1. Fernrohr oder Zielfernrohr mit einem Mittelrohr (6), das zwischen einem Objektiv (4) und einem Okular (5) angeordnet ist, wobei das Mittelrohr (6) ein Umkehrsystem (1) enthält, in das eine Vergrößerungsoptik mit verstellbarer Vergrößerung mit mit einer mehr als vierfachen Vergrößerung integriert ist, und wobei das Umkehrsystem (1) und die Vergrößerungsoptik in einem Bauteil ausgeführt sind und die Vergrößerungsoptik eine Linsenanordnung mit zumindest zwei relativ zueinander verschiebbaren optischen Elementen (3a, 3b) aufweist, wobei das Umkehrsystem (1) zwischen einer objektivseitigen Bildebene (9) und einer okularseitigen Bildebene (10) angeordnet ist, und wobei die objektivseitige Bildebene (9) zwischen dem Objektiv (4) und der dem Objektiv (4) zugewandten Seite des Umkehrsystems (1) liegt, und die okularseitige Bildebene (10) zwischen dem Okular (5) und der dem Okular (5) zugewandten Seite des Umkehrsystems (1) liegt, und wobei durch das Verschieben der zumindest zwei relativ zueinander verschiebbaren optischen Elemente (3a, 3b) des Umkehrsystems (1) ein von dem Objektiv (4) in einer objektivseitigen Bildebene (9) entworfenes Zwischenbild mit einem veränderbaren Abbildungsmaßstab und aufgerichtet mit einem maximalen Zoom größer fünf, in einer okularseitigen Bildebene (10) abgebildet ist und wobei eine optische Strahlumlenkeinrichtung (2) als zusätzliche Linsenanordnung mit einer Brechkraft zwischen -20 dpt (Dioptrien) und -40 dpt in das Umkehrsystem (1) integriert ist, die auf der dem Okular (5) zugewandten Seite des Umkehrsystems (1) angeordnet ist, so dass bei allen Vergrößerungen, mit welchen das objektivseitige Zwischenbild in die okularseitige Bildebene (10) abgebildet wird, ein subjektives Sehfeld (2 ω') der fernoptischen Einrichtung von mindestens 22°, zumindest für Licht mit einer Wellenlänge von etwa 550 nm gewährleistet ist, und wobei die optische Strahlumlenkeinrichtung (2) auf der vom Okular (5) wegweisenden Seite der okularseitigen Bildebene (10) des Fernrohrs oder Zielfernrohrs angeordnet ist.

2. Fernrohr oder Zielfernrohr nach Anspruch 1, **dadurch gekennzeichnet, dass** der maximale Zoom der Vergrößerungsoptik des Umkehrsystems (1) mindestens sechs ist.

3. Fernrohr oder Zielfernrohr nach einem der Ansprüche 1 bis 2, **dadurch gekennzeichnet, dass** die optische Strahlumlenkeinrichtung (2), vorzugsweise zwei, miteinander verklebte Linsen (7) aufweist.

4. Fernrohr oder Zielfernrohr nach einem der vorhergehenden Ansprüche, **dadurch gekennzeichnet, dass** die optische Strahlumlenkeinrichtung (2) fix angeordnet ist.

## Claims

1. A telescope or riflescope with a central tube (6) disposed between an objective lens (4) and an eyepiece (5), wherein the central tube (6) contains an erecting system (1), in which an optical magnification means with adjustable magnification with a more than fourfold magnification is integrated, and wherein the erecting system (1) and the optical magnification means are accommodated in one component and the optical magnification means has a lens arrangement with at least two optical elements (3a, 3b) which are displaceable relative to one another, wherein the erecting system (1) is disposed between an objective lens-end image plane (9) and an eyepiece-end image plane (10), and wherein the objective lens-end image plane (9) lies between the objective lens (4) and the end of the erecting system (1) facing the objective lens (4), and the eyepiece-end image plane (10) lies between the eyepiece (5) and the end of the erecting system (1) facing the eyepiece (5), and wherein, by displacing the at least two optical elements (3a, 3b), which are displaceable relative to one another, of the erecting system (1), an intermediate image projected by the objective lens (4) in an objective lens-end image plane (9) is projected with a variable reproduction scale and oriented upright with a maximum zoom greater than five in an eyepiece-end image plane (10), and wherein an optical beam deflector device (2), which is disposed on the end of the erecting system (1) facing the eyepiece (5), is integrated in the erecting system (1) as an additional lens arrangement with a refractive power between -20 dpt (diopters) and -40 dpt, such that a subjective field of view (2 ω') of the long-range optical device of at least 22° is guaranteed, at least for light with a wavelength of approximately 550 nm, for all magnifications at which the objective lens-end intermediate image is projected into the eyepiece-end image plane (10), and wherein the optical beam deflector device (2) is disposed on the end of the eyepiece-end image plane (10) of the telescope or riflescope facing away from the eyepiece (5).

2. The telescope or riflescope according to claim 1, **characterized in that** the maximum zoom of the optical magnification means of the erecting system (1) is at least six.

3. The telescope or riflescope according to one of claims 1 to 2, **characterized in that** the optical beam deflector device (2) comprises preferably two lenses (7) adhered to one another.

4. The telescope or riflescope according to one of the preceding claims, **characterized in that** the optical beam deflector device (2) is fixedly disposed.

## Revendications

1. Lunette ou lunette de visée, comprenant un tube central (6) agencé entre un objectif (4) et un oculaire (5), dans lequel le tube central (6) contient un système d'inversion (1) au sein duquel est intégrée une optique de grossissement à grossissement réglable permettant un grossissement supérieur à quatre fois, et dans lequel le système d'inversion (1) et l'optique de grossissement sont réalisés d'une seule pièce et l'optique de grossissement présente un agencement de lentilles comportant au moins deux éléments optiques (3a, 3b) pouvant être déplacés l'un par rapport à l'autre, dans lequel le système d'inversion (1) est agencé entre un plan d'image situé côté objectif (9) et un plan d'image situé côté oculaire (10), et dans lequel le plan d'image situé côté objectif (9) est situé entre l'objectif (4) et le côté du système d'inversion (1) qui est tourné vers l'objectif (4) et le plan d'image situé côté oculaire (10) est situé entre l'oculaire (5) et le côté du système d'inversion (1) qui est tourné vers l'oculaire (5), et dans lequel une image intermédiaire envoyée par l'objectif (4) dans un plan d'image situé côté objectif (9) est représentée dans un plan d'image situé côté oculaire (10) avec une échelle de représentation modifiable et est redressée avec un zoom maximal supérieur à cinq en déplaçant les au moins deux éléments optiques (3a, 3b) du système d'inversion (1) qui peuvent être déplacés l'un par rapport à l'autre, et dans lequel un dispositif optique de déviation de faisceau (2) est intégré dans le système d'inversion (1) sous la forme d'un agencement de lentilles supplémentaire présentant une puissance de réfraction comprise entre -20 dpt (dioptries) et -40 dpt, ledit dispositif optique de déviation de faisceau étant agencé du côté du système d'inversion (1) qui est tourné vers l'oculaire (5), de sorte qu'un champ de vision subjectif (2 ω') du dispositif optique de vision à distance d'au moins 22°, au moins pour une lumière d'une longueur d'onde d'environ 550 nm, est garanti pour tous les grossissements avec lesquels l'image intermédiaire située côté objectif est représentée dans le plan d'image situé côté oculaire (10), et dans lequel le dispositif optique de déviation de faisceau (2) est agencé du côté, opposé à l'oculaire (5), du plan d'image situé côté oculaire (10) de la lunette ou de la lunette de visée.

2. Lunette ou lunette de visée selon la revendication 1, **caractérisé en ce que** le zoom maximal de l'optique de grossissement du système d'inversion (1) est d'au moins six.

3. Lunette ou lunette de visée selon l'une quelconque des revendications 1 à 2, **caractérisé en ce que** le dispositif optique de déviation de faisceau (2) présente de manière préférée deux lentilles (7) collées ensemble.

4. Lunette ou lunette de visée selon l'une quelconque des revendications précédentes, **caractérisé en ce que** le dispositif optique de déviation de faisceau (2) est agencé de manière fixe.
